# EUROPEAN PATENT SPECIFICATION

(11) **EP 0 681 085 B1**
(45) Date of publication and mention of the grant of the patent: **10.02.1999**
(21) Application number: 95106661.2
(22) Date of filing: 03.05.1995
(51) Int. Cl.: E21B 17/04, F16L 19/06

(54) **Coiled tubing connector**
Verbinder für biegsame Rohre
Connecteur pour des tubes flexibles

(30) Priority: 05.05.1994 CA 2122957
(43) Date of publication of application: 08.11.1995
(73) Proprietor: CANADIAN FRACMASTER LTD, Calgary, Alberta, T2P OJ1 (CA)
(72) Inventor: Smith, Donald Alexander, Okotoks, Alberta T0L 1T3 (CA)
(74) Representative: Müller-Boré & Partner Patentanwälte

(56) References cited:
- WO-A-93/14294
- US-A- 4 844 516
- US-A- 4 936 618

## Description

### FIELD OF THE INVENTION

There is described a connector and more particularly a coiled tubing connector and a method by which coiled tubing is terminated and secured to the top of a downhole tool string used in the drilling and servicing of oil and gas wells.

### BACKGROUND OF THE INVENTION

Increasingly, the drilling of oil and gas wells is no longer a matter of drilling vertically straight bore holes from the surface to a zone of hydrocarbon recovery using a traditional drilling platform surmounted by a derrick which supports a string of jointed drill pipe having a bit at the lower end thereof. Rather, technology and techniques have been developed to deviate the bore's trajectory at angles of up to and sometimes exceeding 90° from the vertical. Directional drilling offers numerous advantages including new approaches to oil and gas traps having non-conventional geometries, economic zone enhancement as can occur for example if the bore hole actually follows an oil or gas bearing strata, improved economics particularly in an over-pressured environment (when formation pressure is sufficient to force hydrocarbons to the surface at potentially explosive rates) and reduced environmental degradation.

After deviating a bore hole from the vertical, it's obviously no longer completely practical to sustain continuous drilling operations by rotating the drill string in order to also rotate the bit. Preferably, only the bit, but not the string, is rotated by a downhole motor attached to the lower end of the drill string, the motor typically consisting of a rotor-stator to generate torque as drilling fluid passes therethrough, a bent housing to deviate the hole by the required amount and which also encloses a drive shaft therethrough to transmit the rotor/stator's torque to a bearing assembly, and a bit rotatably supported at the downhole end of the bearing assembly for cutting the bore hole.

Electronic means supported by a mule shoe in the bottom hole assembly and connected to the surface by a wire line passing through the interior of the drill string transmits information with respect to the degree and azimuth of the bore hole's trajectory so that it can be plotted and necessary adjustments made. Once the required direction of the hole's trajectory has been attained, the motor must be withdrawn from the well, the bent housing either removed or straightened (if it's of the adjustable sort) and the motor is then tripped back into the hole to resume drilling operations. Each time the motor requires service, or a change in the hole's trajectory is required, this process must be repeated. This results in substantial costs and down time largely due to the time required to make and break all of the joints as the drill string is tripped in and out of the hole.

### SUMMARY OF THE INVENTION

To overcome this problem, discrete lengths of jointed drill pipe are being replaced where feasible with coiled tubing which is a single length of continuous, unjointed tubing spooled onto a reel for storage in sufficient quantity to exceed the maximum length of the bore hole being drilled. The injection and withdrawal of the tubing can be accomplished much more rapidly in comparison with conventional drill pipe due in large part to the elimination of joints. However, as with conventional pipe, drilling mud and wire lines for downhole instrumentation pass through the tubing's interior.

Coiled tubing has been extensively used for well servicing as well as for workovers within previously drilled holes.

More recently, tools and methods have been developed for the actual drilling of bore holes using coiled tubing and reference is made in this regard to U.S. Patent 5,215,151 disclosing such a system. Generally speaking however, the tools so far developed for connecting and disconnecting the coiled tubing, which is not threaded, to downhole motors and tool strings suffer from numerous disadvantages, including poor resistance to rotation, inadequate strength, poor serviceability and general unreliability.

Accordingly, it is an object of the present invention to provide an improved coiled tubing connector by means of which the tubing is terminated and secured to the top of a tool string and which has an improved strength, service ability and torsional resistance to rotation relative to the tool string.

This object is achieved by a connector having the features disclosed in claim 1 and by a method having the features disclosed in claim 9. Preferred embodiments are defined in the subclaims.

According to the present invention then, there is provided a connector for connecting the end of coiled tubing to a downhole tool string, comprising a cylindrical top sub having a first uphole and a second downhole end and a bore formed therethrough for the coiled tubing, a cylindrical seal sub adapted for releasable connection to the top sub downhole thereof, having a first uphole and a second downhole end and a bore formed therethrough for receiving the coiled tubing at least partially therethrough, slip means adapted to at least partially surround the coiled tubing and having on an inner surface thereof means for penetrating a contiguous surface of the coiled tubing for connection thereto, the slip means additionally including means thereon to engage cooperating means on the seal sub for a torque transmitting connection therebetween, and a force transmitting member disposed between the slip means and the bore formed through the top sub to maintain the slip means in compressive contact with the coiled tubing when the top and seal subs are connected together.

According to the present invention then, there is also provided a method of connecting the terminal end of coiled tubing to a downhole tool string, comprising the steps of at least partially surrounding said terminal end with means adapted to penetrate into a surface thereof, applying a compressive force to said means adapted to penetrate to form a non-rotatable connection between said means and said terminal end, and forming a non-rotatable connection between said terminal end with said means connected thereto and housing means, said housing means being adapted for connection to a downhole tool string.

### BRIEF DESCRIPTION OF THE DRAWINGS

Preferred embodiments of the present invention will now be described in greater detail, and will be better understood when read in conjunction with the following drawings in which:
Figure 1 is a side elevational, cross-sectional view of a coiled tubing connector;
Figure 2 is an exploded isometric, partially sectional, view of the connector of Figure 1;
Figure 3 is a flat elevational development of slips forming part of the connector of Figure 1;
Figure 4 is a top plan view of the slips of Figure 1 indicating their curvature;
Figure 5 is an exploded isometric, partially sectional, view of a presetting load press for use in connecting the connector of Figure 1 with coiled tubing; and
Figure 6 is a side elevational, partially cross-sectional, view of the load press of Figure 5.

### DETAILED DESCRIPTION

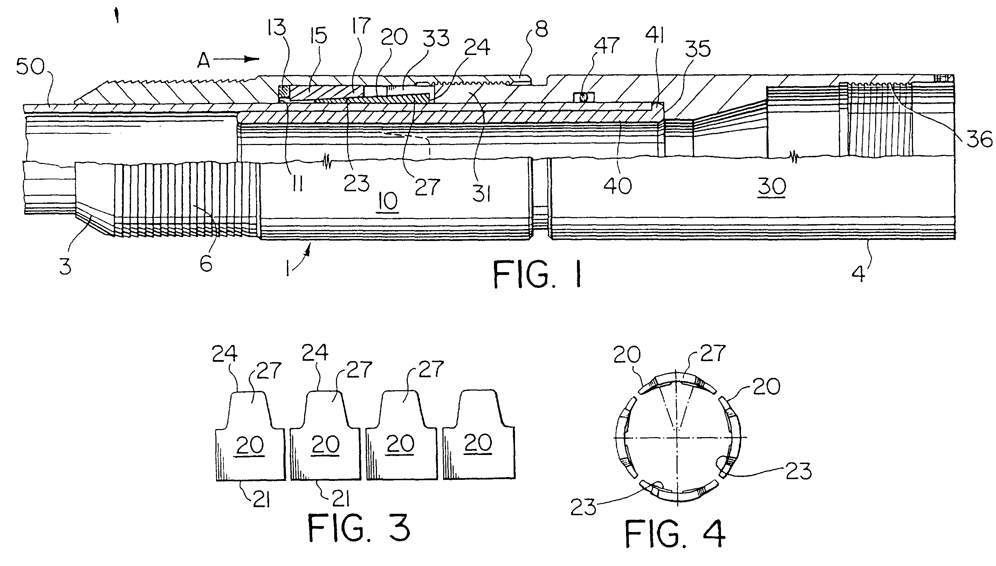

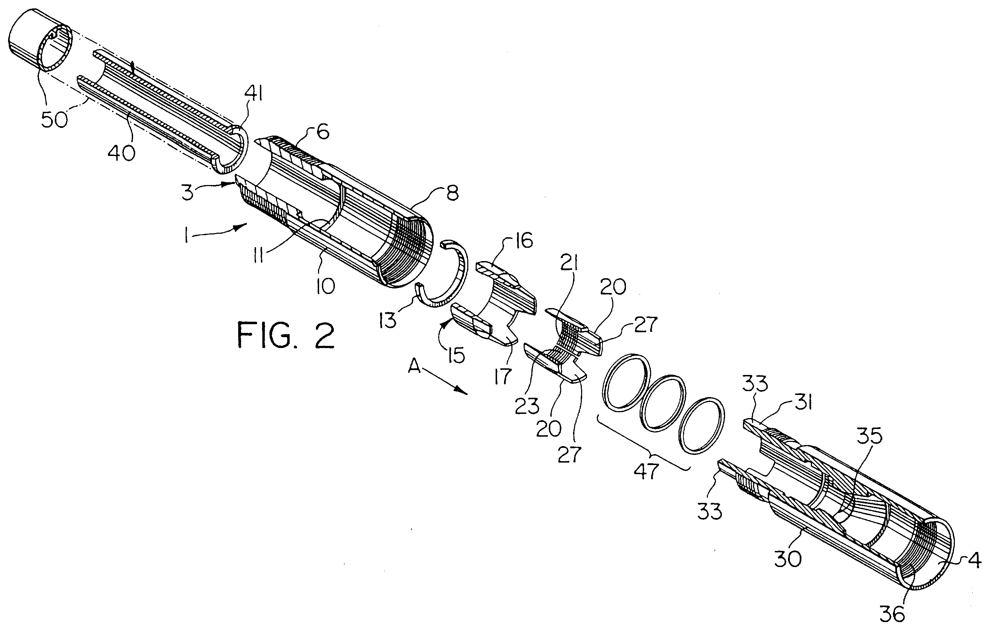

With reference now to Figures 1 and 2, the present connector 1 generally comprises from its uphole to its downhole ends 3 and 4 respectively a tubular top sub 10, a force transmitting wedge 15, a plurality of curved, wedge-slips 20 and a tubular seal sub 30, the top and seal subs together defining a tubular housing.

Top sub 10 includes an externally buttress-threaded fishing neck 6 at its uphole end 3 and is internally threaded at its downhole end 8 for connection to the correspondingly externally threaded uphole end 31 of seal sub 30. The inner diameter of top sub 10 at its uphole end is dimensioned to slide over coiled tubing 50 and widens at shoulder 11 to accommodate washer 13, wedge 15, slips 20 and the uphole end of the seal sub.

As seen most clearly from Figure 2, wedge 15 includes a cylindrical collar 16 having, in one embodiment constructed by the applicant, four spaced apart tapered fingers 17 extending axially therefrom in the downhole direction.

Each of fingers 17 overlies the uphole end 21 of respective ones of tapered slips 20. Each of slips 20 includes buttress threads 23 formed adjacent end 21 thereof on its inner surface facing tubing 50. The axial extent of the buttress threading coincides approximately to the length of the slips overlain by fingers 17 of wedge 15. By applying a compressive force to wedge 15 acting in the direction of arrow A as will be described in greater detail below, buttress threads 23 on slips 20 will penetrate and bite into the outer surface of tubing 50 to form a connection therewith equal in strength to the tensile strength of the tubing itself.

It's critical that the connection between slips 20 and tubing 50 be capable of transmitting torque without relative rotation therebetween under maximum anticipated loading.

In earlier systems, torque has been transmitted between the tubing and the connector by means of lugs or pins that pass through the connector's outer body into apertures or notches formed into the terminal end of the tubing. In the '151 patent mentioned above, this can be seen best from Figure 11a wherein lugs 316 are received into notches or holes 322 in the tubing for transmission of torque. The use of lugs or pins in this manner suffers from numerous disadvantages. The lugs can and will fall out in which event not only will the connection to the tubing be lost, but the lugs can jam in the hole and damage the tool string. The lugs can be sheared off or, if the lugs are stronger than the tubing, the apertures or notches in the tubing can distort or even "rip". There is the additional problem of actually forming the notches in the tubing under field conditions and doing so in proper registry with the holes for the lugs provided in the connector sleeve. Moreover, should the lugs fall out, be sheared off or simply loosen, drilling fluid passing through the tubing will escape resulting in a loss of circulation at the bit.

All of these problems are avoided by the present connector wherein slips 20 are themselves formed with dovetail fingers 27 that interlock with seal sub 30 to prevent rotation of tubing 50 relative to connector 1 as will now be described with reference to Figures 1 to 4.

As seen most easily from the flat development of the slips shown in Figure 3, each of slips 20 is generally T-shaped with the vertical stroke of the T defining a tapered finger 27. Fingers 27 are formed at the downhole ends 24 of slips 20 and are generally cross-sectionally thicker than ends 21 where buttress threads 23 are formed. Fingers 27 are dimensioned to closely mesh with co-operatively opposed teeth 33 provided at the uphole end 31 of seal sub 30. As will be appreciated, the meshing of fingers 27 and teeth 33 thusly prevents relative rotation between tubing 50 and connector 1 without perforation of the tubing and without the need for lugs or pins.

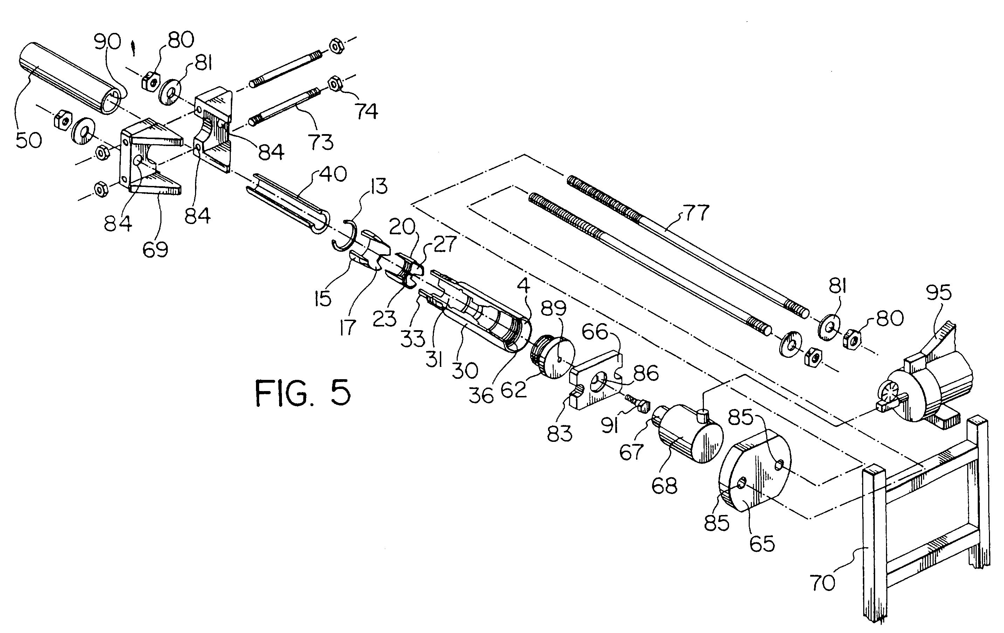

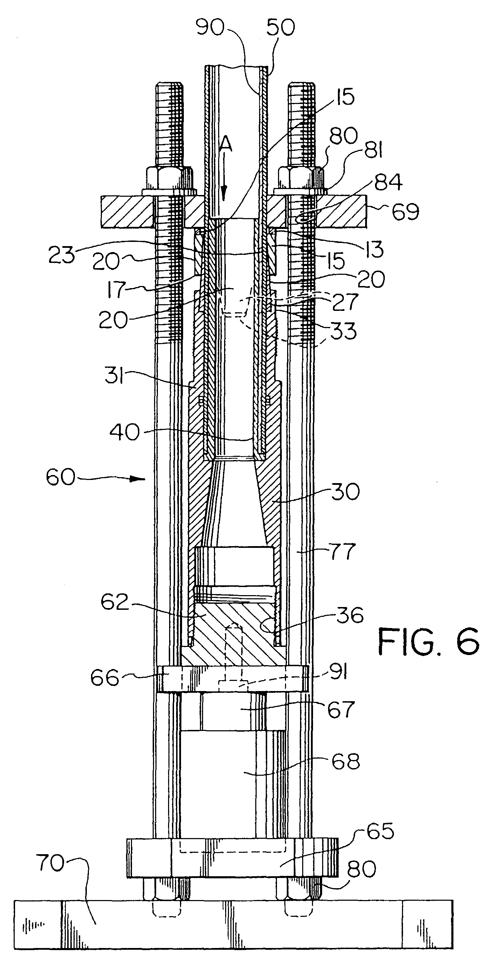

With reference to Figures 5 and 6, connector 1 is connected to tubing 50 by first sliding the top sub 10 over the terminal end of tubing 50 and holding this sub up and away from the tubing's lower end in any suitable fashion. Washer 13 and wedge 15 are then placed over the tubing with fingers 17 of the wedge extending in the downhole direction. The terminal end of the tubing, including an internal tubular support 40 fitted concentrically therein to prevent crushing of the tubing during application of the compressive force on wedge 15, and which has been externally grooved to engage the factory seam 90 in the coiled tubing, is then inserted into the upstream end 31 of seal sub 30. Seal sub 30, including the end of tubing 50 inserted therein, is supported on a push plate 66 of a presetting load press 60 that will be described in greater detail below. Slips 20 are then individually placed by hand around the tubing with fingers 27 loosely positioned between teeth 33 on seal sub 30. Washer 13 and wedge 15 are then lowered down the tubing and over the uphole ends of the slips to overlie the same as best seen from Figure 6. A top plate 69 of press 60 is then assembled over washer 13 and wedge 15. Press 60 is then used to apply a compressive force to the washer and wedge which causes buttress threads 23 on the slips to bite into the tubing's outer surface. Wedge 15 is oriented so that its fingers 17 also mesh between seal sub teeth 33 as the loading progresses. In one embodiment constructed by the applicant, press 60 applies a compressive force of 27 240 kg (60,000 pounds) to wedge 15. Following compression, top plate 69 is removed and top sub 10 is lowered down the tubing for a torqued threaded connection to seal sub 30 so that wedge 15 maintains slips 20 in compressive contact with the coiled tubing (as seen best in Figure 1) and which completes the assembly of the connector to the tubing.

Although the torqued connection between the top and seal subs can itself cause loading of slips 20 against tubing 50, preloading of the slips as described above ensures a far stronger rotation-resistant connection of the slips to the tubing in the event of maximum anticipated loading on the connector.

The downhole end 4 of seal sub 30 is internally threaded at 36 for connection to the remainder of the downhole tool string.

With reference once again to Figures 5 and 6, there will now follow a more detailed description of load press 60.

From the ground up, press 60 includes a ground-engaging frame 70, a base plate 65 for supporting a 30-ton hydraulic ram 68 thereon, the ram having a 3,17 - 11,11 mm (2-7/16 inch) stroke, a push plate 66 atop the ram's piston rod 67 and an externally threaded push plug 62 adapted for connection to threads 36 of seal sub 30. Top plate 69 is formed in two symmetrical halves for assembly about tubing 50 by means of stud bolts 73 and nuts 74. The compressive force generated by ram 68 is transferred to top plate 69 by means of elongated stud bolts 77 which pass through apertures 84 and 85 in top and base plates 69 and 65 respectively and that are removably secured into place by means of nuts 80 and washers 81. Push plate 66 includes notches 83 formed into its opposite ends, the notches being sized to partially conformably surround bolts 77 seated therein. The push plate additionally includes an aperture 86 formed therethrough in registry with a threaded aperture 89 in the bottom of push plug 62 so that the two can be connected together such as by means of a threaded fastener 91. Power to hydraulic ram 68 is provided by a prime mover such as a hydraulic hand pump 95. As will be appreciated, the presetting load press is maintained in a substantially assembled condition apart from the top plate which is assembled to the unit for compressive loading of wedge 15 against slips 20.

## Claims

1. A connector for connecting the end of coiled tubing to a downhole tool string, comprising:
a first tubular housing (10) having a first uphole (3) and a second downhole end (8) and a bore formed therethrough for a length of coiled tubing (50);
a second tubular housing (30) adapted for releasable connection to said downhole end of said first housing (10), said second housing (30) having a first uphole (31) and a second downhole end (4) and a bore formed therethrough for receiving said length of coiled tubing (50) at least partially into said second housing (30);
slip means (20) adapted to at least partially surround said coiled tubing (50) and having on an inner surface thereof means (23) for penetrating a contiguous surface of said coiled tubing (50) for connection thereto, characterized in that said slip means (20) additionally include means (27) thereon to engage cooperating means (33) on said second housing (30) for a non-rotatable torque transmitting connection therebetween; and
force transmitting means (15) are disposed between said slip means (20) and said first housing (10) to maintain said slip means (20) in compressive contact with said coiled tubing (50).

2. The connector of claim 1 wherein said slip means (20) comprise a plurality of slips (20), each of said slips (20) being curved about the longitudinal axis thereof for contact between an inner surface of each of said slips (20) and a contiguous opposed surface of said coiled tubing (50).

3. The connector according to any of claims 1 or 2 wherein said means (27) to engage and said cooperating means (33) on said second housing (30) comprise opposed finger members (27, 33) adapted to cooperatively mesh to prevent rotation of said second mousing (30) relative to said slips (20).

4. The connector according to any of claims 1 to 3 wherein said force transmitting means comprise a cylindrical wedge (15) disposed concentrically between said slip means (20) and said first housing (10).

5. The connector according to any of claims 1 to 4 wherein the connection between said first (10) and second housings (30) causes said wedge (15) to exert a compressive force on said slip means (20) to maintain the latter in compressive contact with said coiled tubing (50).

6. The connector according to any of claims 4 to 5 wherein said wedge (15) includes finger members (17) thereon axially aligned to at least partially overlie respective ones of said slips (20) and that are further adapted to mesh with opposed ones of said finger members (33) on said second housing (30).

7. The connector according to any of claims 1 to 6 wherein at least a portion of said inner surface of each of said slips (20) includes thereon raised means (23) for penetrating said contiguous surface of said coiled tubing (50), said raised means comprising buttress threads (23).

8. The connector according to any of claims 1 to 7 wherein said slips (20) are wedge shaped in longitudinal cross-section, thickening in the direction of said finger members (27) thereon.

9. A method of connecting the terminal end of coiled tubing to a downhole tool string, comprising the steps of:
at least partially surrounding said terminal end with means (20, 23) adapted to penetrate into a surface thereof;
applying a compressive force to said means adapted to penetrate (20, 23) to form a non-rotatable connection between said means and said terminal end; and
forming a non-rotatable connection between said terminal end with said means (20) connected thereto and housing means (10, 30), said housing means (10, 30) being adapted for connection to a downhole tool string.

10. The method of claim 9, further comprising the steps of:
inserting said terminal end through a first tubular housing (10);
inserting said terminal end into one end (31) of a second tubular housing (30);
at least partially surrounding said coiled tubing (50) with slip members (20) having said means (23) thereon to penetrate the surface of said coiled tubing (50);
at least partially covering said slip members (20) with a force transmitting member (15);
applying a presetting force to said force transmitting member (15) to cause penetration of said means (23) on said slip members (20) into the surface of said tubing (50) to form a fixed, non-rotatable connection therebetween;
removing said presetting force; and
connecting said first (10) and second housings (30) together to maintain a compressive force on said force transmitting member (15).

11. The method of claim 10 wherein said slip means (20) and said second housing (30) have means (27, 33) thereon preventing rotation of said housing (10, 30) relative to said slip means (20).

12. The method of claim 10 wherein said presetting force is applied by means of an apparatus comprising:
a first plate (69) adapted to engage said force transmitting member (15);
a second plate (66) adapted to engage a distal end of said second tubular housing (30), at least one of said first and second plates (66, 69) being selectively movable towards and away from the other of said first and second plates (66, 69); and
ram means (68) adapted to apply a force to compress said force transmitting member (15) as said first and second plates (66, 69) move relatively towards one another.

13. The method of claim 12 wherein said first plate (69) is separable into at least two parts for assembly and disassembly about said force transmitting member (15) or about an appendage extending from said force transmitting member (15), said apparatus additionally including a third plate (65) for supporting said ram means (68) thereon for movement of said second plate (66) toward said first plate (69), and means interconnecting said first and third plates (69, 65) to maintain a predetermined maximum spacing between said first and third plates (69, 65) as said ram (68) is actuated to move said second plate (66) towards said first plate (69).

## Patentansprüche

1. Verbinder zum Verbinden des Endes eines gewickelten bzw. gespulten Rohres mit einem untertägigen Werkzeugstrang mit :
einem ersten rohrförmigen Gehäuse (10), welches ein erstes übertägiges (3) und ein zweites untertägiges Ende (8) und eine dadurch über eine Länge des gewickelten Rohres (50) gebildete Bohrung aufweist;
einem zweiten rohrförmigen Gehäuse (30), welches als eine ablösbare Verbindung des untertägigen Endes von dem ersten Gehäuse (10) ausgelegt ist, wobei das zweite Gehäuse (30) ein erstes übertägiges (31) und ein zweites untertägiges Ende (4) und eine dadurch gebildete Bohrung zur Aufnahme der Länge des gewickelten Rohres (50) zumindest teilweise in dem zweiten Gehäuse (30) aufweist;
Rutsch- bzw. Gleitmittel (20), welche ausgelegt sind, um zumindest teilweise das gewickelte Rohr (50) zu umgeben und an deren inneren Flächen Mittel (23) zum Eindringen in eine angrenzende bzw. anstoßende Fläche des gewickelten Rohres (50) zur Verbindung damit aufweisen,
dadurch gekennzeichnet,
daß die Gleitmittel (20) daran zusätzlich Mittel (27) beinhalten, um Zusammenwirkungsmittel (33) an dem zweiten Gehäuse (30) für eine nicht drehbare Momentübertragungsverbindung dazwischen in Eingriff zu bringen; und
Kraftübertragungsmittel (15) zwischen den Gleitmitteln (20) und dem ersten Gehäuse (10) angeordnet sind, um die Gleitmittel (20) in einer Druckberührung mit dem gewickelten Rohr (50) zu halten.

2. Verbinder nach Anspruch 1, wobei die Gleitmittel (20) eine Vielzahl von Gleitern (20) umfassen, wobei jeder der Gleiter (20) um dessen longitudinale Achse zur Berührung zwischen einer Innenfläche von jedem der Gleiter (20) und einer angrenzenden bzw. anstoßenden gegenüberliegenden Fläche des gewickelten Rohres (50) gekrümmt ist.

3. Verbinder nach Anspruch 1 oder 2, wobei die Mittel (27) zum Ineingriffbringen und die Zusammenwirkungsmittel (33) an dem zweiten Gehäuse (30) umgekehrte bzw. gegenüberliegende Fingerbauteile (27, 33) umfassen, welche zum gemeinsamen Kämmen ausgelegt sind, um eine Drehung des zweiten Gehäuses (30) relativ zu den Gleitern (20) zu verhindern.

4. Verbinder nach einem der Ansprüche 1 bis 3, wobei das Kraftübertragungsmittel einen zylindrischen Keil (15) umfaßt, welcher konzentrisch zwischen den Gleitmitteln (20) und dem ersten Gehäuse (10) angeordnet ist.

5. Verbinder nach einem der Ansprüche 1 bis 4, wobei die Verbindung zwischen dem ersten (10) und zweiten Gehäuse (30) den Keil (15) dazu veranlaßt, eine Druckkraft auf die Gleitmittel (20) auszuüben, um die letzteren in einer Druckberührung mit dem gewickelten Rohr (50) beizubehalten.

6. Verbinder nach einem der Ansprüche 4 bis 5, wobei der Keil (15) daran Fingerbauteile (17) beinhaltet, welche axial ausgerichtet sind, um zumindest die jeweiligen der Gleiter (20) teilweise zu überlagern und die ferner ausgelegt sind, um mit den jeweiligen gegenüberliegenden der Fingerbauteile (33) an dem zweiten Gehäuse (30) zu kämmen.

7. Verbinder nach einem der Ansprüche 1 bis 6, wobei zumindest ein Abschnitt der Innenfläche von jedem der Gleiter (20) daran Erhöhungsmittel (23) zum Eindringen in die angrenzende bzw. anstoßende Fläche des gewickelten Rohres (50) beinhaltet, wobei die Erhöhungsmittel Sägezahngewinde (23) umfassen.

8. Verbinder nach einem der Ansprüche 1 bis 7, wobei die Gleiter (20) im longitudinalen Querschnitt keilförmig sind, wobei sie in der Richtung der daran angeordneten Fingerbauteile (27) dicker werden.

9. Verfahren zum Verbinden des Anschlußendes eines gewickelten Rohres mit einem untertägigen Werkzeugstrang mit den Schritten:
zumindest teilweise Umgeben des Anschlußendes mit Mitteln (20, 23), welche zum Eindringen in eine Fläche von diesem ausgelegt sind;
Anwenden einer Druckkraft auf die zum Eindringen ausgelegten Mittel (20, 23), um eine nicht drehbare Verbindung zwischen den Mitteln und dem Anschlußende zu bilden; und
Bilden einer nicht drehbaren Verbindung zwischen dem Anschlußende mit den damit verbundenen Mitteln (20) und Gehäusemitteln (10, 30), wobei die Gehäusemittel (10, 30) zur Verbindung mit einem untertägigen Werkzeugstrang ausgelegt sind.

10. Verfahren nach Anspruch 9, mit den weiteren Schritten:
Einführen des Anschlußendes durch ein erstes rohrförmiges Gehäuse (10);
Einführen des Anschlußendes in ein Ende (31) eines zweiten rohrförmigen Gehäuses (30);
zumindest teilweise Umgeben des gewickelten Rohres (50) mit Gleitbauteilen (20), welche daran Mittel (23) zum Eindringen in die Fläche des gewickelten Rohres (50) aufweisen;
zumindest teilweise Umhüllen der Gleitbauteile (20) mit einem Kraftübertragungsbauteil (15);
Anwenden einer Voreinstellungskraft auf das Kraftübertragungsbauteil (15), um ein Eindringen der Mittel (23) an den Gleitbauteilen (20) in die Fläche des Rohres (50) zu verursachen, um dazwischen eine feste, nicht drehbare Verbindung zu bilden;
Entfernen der Voreinstellungskraft; und
miteinander Verbinden des ersten (10) und zweiten Gehäuses (30), um eine Druckkraft auf das Kraftübertragungsbauteil (15) beizubehalten.

11. Verfahren nach Anspruch 10, wobei die Gleitmittel (20) und das zweite Gehäuse (30) Mittel (27, 33) daran aufweisen, welche eine Drehung des Gehäuses (10, 30) relativ zu den Gleitmitteln (20) verhindern.

12. Verfahren nach Anspruch 10, wobei die Voreinstellungskraft mittels einer Vorrichtung angewendet wird, welche umfaßt:
eine erste Platte (69), welche ausgelegt ist, um das Kraftübertragungsbauteil (15) in Eingriff zu bringen;
eine zweite Platte (66), welche ausgelegt ist, um ein entferntes bzw. distales Ende des zweiten rohrförmigen Gehäuses (30) in Eingriff zu bringen, wobei zumindest eine der ersten und zweiten Platte (66, 69) selektiv in Richtung der anderen der ersten und zweiten Platte (66, 69) und von dieser weg beweglich ist; und
Schlitten- bzw. Stempelmittel (68), welches zum Anlegen einer Kraft zum Zusammendrücken des Kraftübertragungsbauteiles (15) ausgelegt ist, wenn die erste und zweite Platte (66, 69) sich relativ zueinander bewegen.

13. Verfahren nach Anspruch 12, wobei die erste Platte (69) in zumindest zwei Teile zum Zusammenbau und Auseinanderbau um das Kraftübertragungsbauteil (15) oder um ein sich von dem Kraftübertragungsbauteil (15) erstreckendes Anhängsel trennbar ist, wobei die Vorrichtung zusätzlich eine dritte Platte (65) zum Tragen des Schlittenmittels (68) daran zur Bewegung der zweiten Platte (66) in Richtung der ersten Platte (69) und Mittel beinhaltet, welche die erste und dritte Platte (69, 65) miteinander verbinden, um einen vorbestimmten maximalen Abstand zwischen der ersten und dritten Platte (69, 65) beizubehalten, wenn der Schlitten (68) zur Bewegung der zweiten Platte (66) in Richtung der ersten Platte (69) betätigt wird.

## Revendications

1. Raccord pour raccorder l'extrémité d'un tube flexible à une rame d'outil de fond de puits, comprenant :
un premier boîtier tubulaire (10) comportant une première extrémité supérieure (3) et une seconde extrémité inférieure (8) et un alésage formé en son sein pour une longueur de tube flexible (50) ;
un second boîtier tubulaire (30) adapté à être raccordé avec possibilité de libération à ladite extrémité inférieure dudit premier boîtier (10), ledit second boîtier (30) comportant une première extrémité supérieure (31) et une seconde extrémité inférieure (4) et un alésage formé en son sein pour recevoir ladite longueur de tube flexible (50) au moins en partie dans ledit second boîtier (30) ;
des moyens de cales (20) adaptés à entourer au moins en partie ledit tube flexible (50) et comportant sur une surface interne des moyens (23) pour pénétrer dans une surface contiguë dudit tube flexible (50) pour raccordement à celui-ci, caractérisé en ce que lesdits moyens de cales (20) comprennent, en outre, des moyens (27) sur eux pour engager des moyens coopérants (33) sur ledit second boîtier (30) pour un raccordement avec transmission de couple sans rotation entre eux ; et
des moyens de transmission de force (15) sont disposés entre lesdits moyens de cales (20) et ledit premier boîtier (10) pour maintenir lesdits moyens de cales (20) en contact de compression avec ledit tube flexible (50).

2. Raccord selon la revendication 1, dans lequel lesdits moyens de cales (20) comprennent une pluralité de cales (20), chacune desdites cales (20) étant incurvée autour de son axe longitudinal pour un contact entre une surface interne de chacune desdites cales (20) et une surface opposée contiguë dudit tube flexible (50).

3. Raccord selon l'une quelconque des revendications 1 ou 2, dans lequel lesdits moyens d'engagement (27) et lesdits moyens coopérants (33) sur ledit second boîtier (30) comprennent des organes de doigts opposés (27, 33) adaptés à coopérer par engrènement pour empêcher une rotation dudit second boîtier (30) relativement auxdites cales (20).

4. Raccord selon l'une quelconque des revendications 1 à 3, dans lequel lesdits moyens de transmission de force comprennent un coin cylindrique (15) disposé concentriquement entre lesdits moyens de cales (20) et ledit premier boîtier (10).

5. Raccord selon l'une quelconque des revendications 1 à 4, dans lequel le raccordement entre lesdits premier (10) et second (30) boîtiers amène ledit coin (15) à exercer une force de compression sur lesdits moyens de cales (20) pour maintenir ces derniers en contact de compression avec ledit tube flexible (50).

6. Raccord selon l'une quelconque des revendications 1 à 5, dans lequel ledit coin (15) comprend des organes de doigts (17) sur eux alignés axialement pour recouvrir au moins en partie des cales respectives (20) et qui sont en outre adaptés à s'engrener avec des organes de doigts opposés (33) sur ledit second boîtier (30).

7. Raccord selon l'une quelconque des revendications 1 à 6, dans lequel au moins une partie de ladite surface interne de chacune desdites cales (20) comprend sur elle des moyens exhaussés (23) pour pénétrer dans ladite surface contiguë dudit tube flexible (50), lesdits moyens exhaussés comprenant des filets en dents de scie (23).

8. Raccord selon l'une quelconque des revendications 1 à 7, dans lequel lesdites cales (20) sont en forme de coins en section transversale longitudinale, allant en s'épaississant dans la direction desdits organes de doigts (27) sur elles.

9. Procédé de raccordement de l'extrémité terminale d'un tube flexible à une rame d'outil de fond de puits, comprenant les opérations consistant à :
entourer au moins en partie ladite extrémité terminale avec des moyens (20, 23) adaptés à pénétrer dans une surface de celle-ci ;
appliquer une force de compression sur lesdits moyens adaptés à une pénétration (20, 23) pour former un raccordement sans rotation entre lesdits moyens et ladite extrémité terminale ; et
former un raccordement sans rotation entre ladite extrémité terminale avec lesdits moyens (20) raccordés à celle-ci et des moyens de boîtiers (10, 30), lesdits moyens de boîtiers (10, 30) étant adaptés à un raccordement à une rame d'outil de fond de puits.

10. Procédé selon la revendication 9, comprenant, en outre, les opérations consistant à :
insérer ladite extrémité terminale dans un premier boîtier tubulaire (10);
insérer ladite extrémité terminale dans une extrémité (31) d'un second boîtier tubulaire (30) ;
entourer au moins en partie ledit tube flexible (50) avec des organes de cales (20) comportant lesdits moyens (23) sur eux pour pénétrer dans la surface dudit tube flexible (50) ;
recouvrir au moins en partie lesdits organes de cales (20) avec un organe de transmission de force (15) ;
appliquer une force de préréglage sur ledit organe de transmission de force (15) pour provoquer une pénétration desdits moyens (23) sur lesdits organes de cales (20) dans la surface dudit tube (50) pour former un raccordement fixe, sans rotation, entre eux ;
supprimer ladite force de préréglage ; et
raccorder lesdits premier (10) et second (30) boîtiers l'un à l'autre pour maintenir une force de compression sur ledit organe de transmission de force (15).

11. Procédé selon la revendication 10, dans lequel lesdits moyens de cales (20) et ledit second boîtier (30) comportent des moyens (27, 33) sur eux empêchant une rotation dudit boîtier (10, 30) relativement auxdits moyens de cales (20).

12. Procédé selon la revendication 10, dans lequel ladite force de préréglage est appliquée au moyen d'un appareil comprenant :
une première plaque (69) adaptée à engager ledit organe de transmission de force (15) ;
une deuxième plaque (66) adaptée à engager une extrémité distale dudit second boîtier tubulaire (30), au moins une desdites première et deuxième plaques (66, 69) pouvant être rapprochée et éloignée sélectivement de l'autre desdites première et deuxième plaques (66, 69) ; et
un moyen de coulisseau (68) adapté à appliquer une force pour comprimer ledit organe de transmission de force (15) tandis que lesdites première et deuxième plaques (66, 69) se déplacent l'une vers l'autre.

13. Procédé selon la revendication 12, dans lequel ladite première plaque (69) est séparable en au moins deux parties pour assemblage et désassemblage autour dudit organe de transmission de force (15) ou autour d'un appendice s'étendant depuis ledit organe de transmission de force (15), ledit appareil comprenant, en outre, une troisième plaque (65) pour supporter ledit moyen de coulisseau (68) sur elle pour un déplacement de ladite deuxième plaque (66) vers ladite première plaque (69), et des moyens reliant mutuellement lesdites première et troisième plaques (69, 65) pour maintenir un espacement maximal prédéterminé entre lesdites première et troisième plaques (69, 65) tandis que ledit coulisseau (68) est actionné pour déplacer ladite deuxième plaque (66) vers ladite première plaque (69).
